# EUROPÄISCHE PATENTANMELDUNG

(11) **EP 0 744 134 A2**
(43) Veröffentlichungstag der Anmeldung: **27.11.1996**
(21) Anmeldenummer: 96107143.8
(22) Anmeldetag: 07.05.1996
(51) Int. Cl.: A24C 5/34

(54) **Dichtemesseinrichtung für Strangmaschinen der tabakverarbeitenden Industrie**

(30) Priorität: 20.05.1995 DE 19518640
(71) Anmelder: Hauni Maschinenbau Aktiengesellschaft, D-21033 Hamburg (DE)
(72) Erfinder: Möller, Henning, Dr., 22605 Hamburg (DE); Hoppe, Reinhard, 21395 Tespe (DE)

(57) **Zusammenfassung**

Die Dichtemeßeinrichtung zum Messen der Dichte der in einer Doppelstrangmaschine hergestellten Tabakstränge (6,7) weist Mittel (4) zum Erzeugen einer die Stränge durchdringenden Meßstrahlung (8) und Mittel (19,21,22) zum Erfassen der Intensität der Meßstrahlung nach dem Durchgang durch die Stränge als Maß für die Strangdichte auf. Als Mittel (4) zum Erzeugen der Meßstrahlung (8) ist eine Röntgenstrahlungsquelle (11) vorgesehen, deren Strahlung beide Tabakstränge (6,7) schräg zur Ebene (18) der beiden Stränge durchdringt. Ein weiterer Teilstrahl (27) trifft als Referenzstrahl einen separaten Detektor (21), welcher Referenzsignale zum Abgleich der Meßsignale der Detektoren (19,22) bildet.

Diese Meßeinrichtung stellt eine zuverlässige, platzsparende und kostengünstige Alternative zu den üblichen nuklearen Meßköpfen in Doppelstrangmaschinen dar.

## Beschreibung

Die Erfindung betrifft eine Dichtemeßeinrichtung an einer Doppelstrangmaschine der tabakverarbeitenden Industrie zum Messen der Dichte der hergestellten Zigarettenstränge mit Mitteln zum Erzeugen einer die Stränge durchdringenden Meßstrahlung und Mitteln zum Erfassen der Intensität der Meßstrahlung nach dem Durchgang durch die Stränge als Maß für die Strangdichte.

Dichtemeßeinrichtungen werden in Strangmaschinen der tabakverarbeitenden Industrie eingesetzt, um die Gleichmäßigkeit des Tabakgehaltes in einem Tabakstrang für die Herstellung von rauchbaren Tabakartikeln wie Zigaretten, Stumpen, Zigarillos usw. sicherzustellen. Die gleichmäßige Füllung des Strangs mit Tabakfasern und ihre Verteilung im Strang sind bekanntlich ein wesentliches Qualitätskriterium für die aus dem Strang hergestellten Artikel. Als Maß für die Füllung des Strangs, also die Tabakmenge im Strang, wird seine Dichte erfaßt.

Bekannt und allgemein gebräuchlich sind derzeit Dichtemeßeinrichtungen, die mit radioaktiver Strahlung - in der Regel mit der Beta-Strahlung eines Strontium 90-Präparates (US-PS 4 424 443) - den Strang durchdringen, deren Intensitätsabfall beim Durchdringen des Strangs als Maß für die Strangdichte erfaßt wird. Die mit dieser Meßeinrichtung gewonnenen Meßergebnisse zeichnen sich durch hohe Zuverlässigkeit aus, werden aber wegen des erforderlichen permanenten Beta-Strahlers mit aufwendigen Sicherheitsmaßnahmen an der Maschine erkauft.

Es ist in jüngerer Zeit auch eine Dichtemeßeinrichtung bekannt geworden, die mit infrarotem Licht als Meßstrahlung arbeitet (US-PS 4 805 641). Diese Einrichtung hat den Vorteil, daß sie ohne eine radioaktive Strahlungsquelle auskommt, erreicht aber noch nicht ganz die Zuverlässigkeit der nuklearen Dichtemessung. Auch die Verwendung von Röntgenstrahlung als Meßstrahlung für die Dichtemessung ist bereits vorgeschlagen worden (US-PS 3 056 026), konnte sich aber trotz einiger Vorteile wegen überwiegender Schwierigkeiten und Unzulänglichkeiten bisher nicht durchsetzen.

Alle genannten Meßeinrichtungen sind für die Messung der Dichte jeweils eines Tabakstranges vorgesehen und für die gleichzeitige Dichtemessung zweier Tabakstränge zur Gewinnung individueller Informationen über die Dichte der Stränge in einer Doppelstrangmaschine nicht geeignet.

Der vorliegenden Erfindung liegt die Aufgabe zugrunde, eine weitere Meßeinrichtung zum Messen der Dichte von Tabaksträngen, insbesondere in einer Doppelstrangmaschine, anzugeben.

Gelöst wird diese Aufgabe bei einer Dichtemeßeinrichtung der eingangs angegebenen Art erfindungsgemäß dadurch, daß als Mittel zum Erzeugen der Meßstrahlung eine Röntgenstrahlungsquelle vorgesehen ist, deren Strahlung als Meßstrahlung beide Stränge durchdringt und zur Bildung von die Strangdichte repräsentierenden Meßsignalen erfaßt wird. Auf diese Weise sind zuverlässige Dichteinformationen individuell für beide Stränge einer Doppelstrangmaschine zu bekommen, wobei sich der meßtechnische Aufwand in Grenzen hält. Zu diesem Zweck ist in vorteilhafter Weiterbildung der Erfindung die Röntgenstrahlungsquelle so angeordnet, daß je ein Teilstrahl der von ihr ausgehenden Meßstrahlung einen der Stränge durchdringt und jedem Strang ist ein Röntgenstrahlungsdetektor zum Aufnehmen der den jeweiligen Strang durchdringenden Meßstrahlung und zum Erzeugen eines individuellen Dichtemeßsignals zugeordnet. Gemäß der Erfindung genügt also eine einzige Strahlungsquelle, um die Dichte beider Stränge in der Doppelstrangmaschine zu erfassen. Gemäß einer vorteilhaften Ausgestaltung der Erfindung ist ein weiterer Röntgenstrahlungsdetektor vorgesehen, der einen Teil der Meßstrahlung erfaßt, welche als Referenzstrahlung keinen der Stränge durchdringt und der in Abhängigkeit von der Referenzstrahlung Referenzsignale erzeugt. Die Röntgenstrahlungsquelle weist gemäß der Erfindung einen Ausstrahlungswinkel von wenigstens etwa 20° auf. Sie gibt also einen Meßstrahl ab, der weit genug ist, um beide Stränge einer Doppelstrangmaschine nebeneinander zu erfassen. Um die Röntgenstrahlungsquelle möglichst dicht bei den nebeneinander verlaufenden Strängen anordnen zu können, sieht eine weitere Fortführung der Erfindung vor, daß die beiden Stränge in einer Strangebene nebeneinander durch eine Prüfzone geführt sind, daß die Röntgenstrahlungsquelle schräg zur Strangebene ausgerichtet ist und daß die Meßstrahlung die beiden Stränge schräg zur Strangebene durchdringt. Auf diese Weise kann die Röntgenstrahlungsquelle sehr nahe bei den beiden Strängen angeordnet sein, die dennoch ganz in dem von der Röntgenstrahlungsquelle abgegebenen Meßstrahl liegen. So wird die Intensität der Meßstrahlung optimal für die Prüfung der Dichte der Stränge genutzt.

Als Röntgenstrahlungsdetektoren können im wesentlichen alle bekannten, für Röntgenstrahlung empfindlichen Sensoren eingesetzt werden. Die Erfindung sieht jedoch vorzugsweise als Röntgenstrahlungsdetektoren Silizium-Fotodioden vor. Diese haben in dem hier in Frage kommenden Energiebereich der Röntgenstrahlung eine gute Empfindlichkeit, sind robust und kostengünstig.

In weiterer Fortsetzung der Erfindung sind die Detektoren an eine Steueranordnung angeschlossen, und die Steueranordnung ist die Meßsignale wenigstens eines Detektors im Sinne des Ausgleichs des Einflusses einer Entfernungsdifferenz der Detektoren zur Strahlungsquelle korrigierend ausgebildet. Mit dieser Anordnung werden also Meßfehler vermieden, die sich aus der schrägen Anordnung der Röntgenstrahlungsquelle zu der Strangebene der beiden Stränge ergeben könnten.

Der weitere Detektor für die Erfassung des Referenzstrahles ist zwischen den den beiden Strängen zugeordneten Detektoren angeordnet. So wird die Weite des schräg eintreffenden Meßstrahles optimal für die Dichtemessung genutzt. Die Detektoren sind gemäß der Erfindung seitlich gestaffelt an einem gemeinsamen Tragkörper angebracht. Gemäß einer weiteren Fortführung der Erfindung sind die Röntgenstrahlungsquelle und der Tragkörper mit den Detektoren in einem als Baueinheit ausgebildeten Meßkopf untergebracht, welcher modulartig austauschbar in die Strangmaschine einsetzbar ist. Dadurch ergibt sich eine einfache Handhabung der Meßeinrichtung bei der Montage und der Wartung und es ergibt sich die Möglichkeit der Nachrüstung bereits existierender Maschinen.

Die Erfindung bietet den Vorteil einer zuverlässigen Dichtemessung ohne Nuklearstrahlung. Bei der verwendeten Röntgenstrahlung handelt es sich zwar auch um eine relativ energiereiche Strahlung, die während des Betriebes gewisse Abschirmungen erfordert, die aber bei weitem nicht den sicherheitstechnischen Aufwand wie für die bisher genutzte Nuklearstrahlung verlangt. Im Gegensatz zu der permanent strahlenden nuklearen Strahlungsquelle kann die Röntgenstrahlungsquelle abgeschaltet werden. Ein besonderer Vorteil der Erfindung ergibt sich dadurch, daß für die Dichtemessung beider Stränge einer Doppelstrangmaschine eine einzige Röntgenstrahlungsquelle ausreicht, deren Strahlung zudem noch für die dauernde Erzeugung eines Referenzsignales genutzt wird. Dadurch ergibt sich ein geringer Platzbedarf bei gleichzeitig relativ geringen Kosten. Vorteilhaft ist auch die Konzeption des Meßkopfes als austauschbares Modul, was die Montage und Wartung erleichtert und die Nachrüstung vorhandener Maschinen ermöglicht. Insgesamt stellt die neue Dichtemeßeinrichtung eine technisch gleichwertige, zuverlässige und dabei kostengünstige und platzsparende Alternative zu nuklearen Meßköpfen in Doppelstrangmaschinen dar.

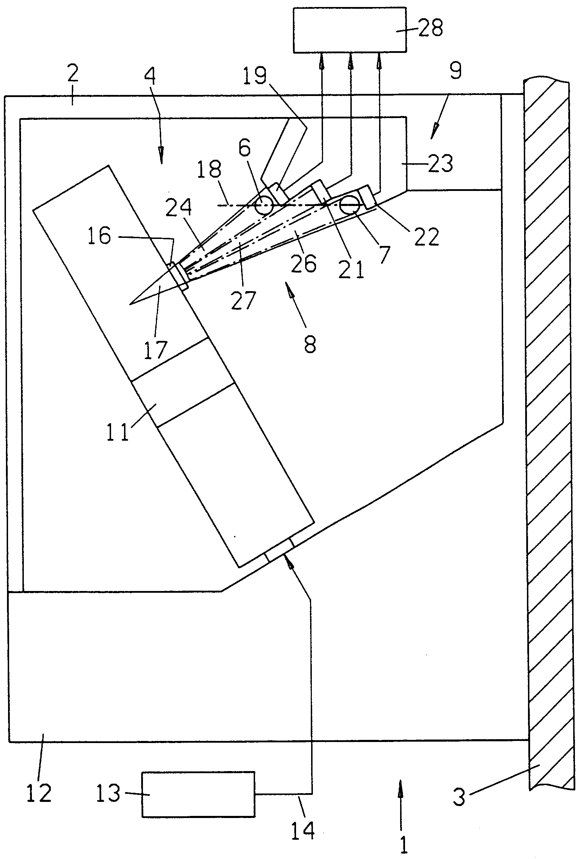

Die Erfindung wird nun anhand der Zeichnung näher erläutert.

Die einzige Figur zeigt in einer schematisierten Ansicht eine Meßeinrichtung nach der Erfindung.

Die Zeichnung zeigt einen Meßkopf 1 für die Strangdichtemessung in einer Doppelstrangmaschine. Der Meßkopf ist in einem Gehäuse 2 untergebracht, welches mit nicht dargestellten Mitteln am Maschinenrahmen 3 der nicht weiter dargestellten Doppelstrangmaschine befestigt ist. Dieser Meßkopf stellt ein einsetzbares und austauschbares Modul dar, das separat montiert und gewartet werden kann. Dadurch ist es möglich, auch bereits vorhandene Doppelstrangmaschinen mit diesem Meßkopf nachzurüsten.

Die wesentlichen Bestandteile des Meßkopfes sind eine Strahlungsquelle 4 zum Erzeugen einer die zu prüfenden Tabakstränge 6 und 7 durchdringenden Meßstrahlung 8 und eine Detektoranordnung 9 zum Erfassen der die Tabakstränge 6 und 7 durchdringenden Strahlung.

Als Strahlungsquelle 4 ist eine Röntgenstrahlungsquelle 11 vorgesehen, die in einem Sockel 12 des Meßkopfgehäuses 2 gehaltert ist. Durch den Sockel 12 ist eine mit einer Hochspannungsquelle 13 verbundene Zuleitung 14 geführt, welche die Röntgenröhre 11 mit der notwendigen Hochspannung versorgt. Auch die übrigen für den Betrieb der Röntgenröhre 11 erforderlichen Anschlüsse sind in dem Sockel 12 vorgesehen, aber in der Zeichnung nicht gesondert dargestellt.

Die Röntgenröhre 11 weist ein Strahlenaustrittsfenster 16 auf, durch welches die Meßstrahlung 8 in einem Ausstrahlungswinkel 17 von wenigstens etwa 20° austritt.

Quer zur Meßstrahlung 8 sind die beiden zu prüfenden Tabakstränge 6 und 7 geführt, die in einer gemeinsamen Strangebene 18 verlaufen und mit Abstand nebeneinander die Meßstrahlung kreuzen.

Die Detektoranordnung 9 weist drei Röntgendetektoren 19, 21 und 22 auf, die an einem gemeinsamen Tragkörper 23 angeordnet sind. Die Detektoren sind zum Strahlenaustrittsfenster 16 der Röntgenröhre 11 hin ausgerichtet und entsprechend der relativen Lage der Tabakstränge 6 und 7 zur Röntgenröhre 11 gestaffelt. Wie die Zeichnung zeigt, ist die Röntgenstrahlungsquelle 11 schräg zu der gemeinsamen Ebene 18 der beiden Tabakstränge 6 und 7 ausgerichtet, so daß die Meßstrahlung 18 die Stränge 6 und 7 schräg zur Strangebene 18 durchdringt. Diese Anordnung ermöglicht einen kompakten Aufbau des Meßkopfs 1, weil die Röntgenstrahlungsquelle 11 in relativ kurzem Abstand zu den Tabaksträngen 6 und 7 angeordnet sein kann und dennoch mit einem einzigen Meßstrahl 8 beide Tabakstränge gleichzeitig erfaßt. Der kurze Abstand der Röntgenstrahlungsquelle zu den Tabaksträngen kommt der Intensität zugute, mit der die Stränge durchstrahlt werden, so daß die Detektoren zuverlässige Meßsignale erzeugen können. Die Ausrichtung der Röntgenstrahlungsquelle 11 zu der Strangebene 18 ist so gewählt, daß Teilstrahlen 24 und 26 der Meßstrahlung 8 die beiden Tabakstränge 6 und 7 durchdringen und von diesen Strängen zugeordnete Detektoren 19 und 22 zur Bildung von Meßsignalen erfaßt werden. Zwischen den Teilstrahlen 24 und 26 liegt ein weiterer Teilstrahl 27 als Referenzstrahl, dessen Intensität vom Detektor 21 erfaßt und zu einem Referenzsignal verarbeitet wird. Der Referenzdetektor 21 liegt zwischen den Detektoren 19 und 22, die den Tabaksträngen 6 und 7 zugeordnet sind, so daß die ganze Weite der Meßstrahlung 8 für die Messung der Dichte ausgenutzt wird. Die Referenzmessung dient dazu, Veränderungen der Strahlungsintensität der Röntgenröhre 11, die Änderungen der Dichte der Tabakstränge vortäuschen können und zu Fehlbeurteilungen der Strangqualität führen, zu erfassen. In Abhängigkeit von den Referenzsignalen werden die Meßsignale der Detektoren 19 und 22 korrigiert und/oder die Strahlungsintensität der Röntgenröhre 11 geregelt.

Die Röntgenstrahlendetektoren 19, 21 und 22 sind an eine Steueranordnung 28 angeschlossen, welche die Meßsignale zu entsprechenden Dichtesignalen verarbeitet und diese an die die Dichte beeinflussenden Aggregate der Maschine abgibt.

Der Abstand der Tabakstränge 6 und 7 zur Röntgenstrahlungsquelle 11 ist unterschiedlich groß. Aus diesem Grund ist die Steueranordnung 28 so ausgebildet, daß sie den Einfluß dieser Abstandsdifferenz auf die Meßwerte der Detektoren kompensiert. Das kann beispielsweise durch die Einführung entsprechender empirisch ermittelter Faktoren bei der Verarbeitung der von den Detektoren abgegebenen Signale erfolgen.

Als Röntgenstrahlungsquelle kann beispielsweise eine Metall-Keramik Röntgenröhre des Typs MCB 40-1C der Firma rtw Röntgen-Technik Dr. Warrikhoff KG in D-15366 Neuenhagen eingesetzt werden. Als Detektoren können im Prinzip alle gängigen Röntgenstrahlensensoren verwendet werden. Hier werden jedoch vorzugsweise Silizium-Fotodioden, z.B. des Typs CXM PSD der Firma Crystal, Berlin verwendet, die zuverlässige Meßsignale erzeugen.

## Patentansprüche

1. Dichtemeßeinrichtung an einer Doppelstrangmaschine der tabakverarbeitenden Industrie zum Messen der Dichte der hergestellten Zigarettenstränge mit Mitteln zum Erzeugen einer die Stränge durchdringenden Meßstrahlung und Mitteln zum Erfassen der Intensität der Meßstrahlung nach dem Durchgang durch die Stränge als Maß für die Strangdichte, dadurch gekennzeichnet, daß als Mittel (4) zum Erzeugen der Meßstrahlung (8) eine Röntgenstrahlungsquelle (11) vorgesehen ist, deren Strahlung als Meßstrahlung beide Stränge (6,7) durchdringt und zur Bildung von die Strangdichte repräsentierenden Meßsignalen erfaßt wird.

2. Meßeinrichtung nach Anspruch 1, dadurch gekennzeichnet, daß die Röntgenstrahlungsquelle (11) so angeordnet ist, daß je ein Teilstrahl (24,26) der von ihr ausgehenden Meßstrahlung (8) einen der Stränge (6,7) durchdringt und daß jedem Strang ein Röntgenstrahlungsdetektor (19,22) zum Aufnehmen der den jeweiligen Strang durchdringenden Meßstrahlung und zum Erzeugen eines individuellen Dichtesignals zugeordnet ist.

3. Meßeinrichtung nach Anspruch 1 oder 2, dadurch gekennzeichnet, daß ein weiterer Röntgenstrahlungsdetektor (21) vorgesehen ist, daß der weitere Detektor einen Teil (27) der Meßstrahlung (8) erfaßt, welcher als Referenzstrahlung keinen der Stränge (6,7) durchdringt, und daß der weitere Detektor (21) in Abhängigkeit von der Referenzstrahlung Referenzsignale erzeugt.

4. Meßeinrichtung nach einem der Ansprüche 1 bis 3, dadurch gekennzeichnet, daß die Röntgenstrahlungsquelle (11) einen Ausstrahlungswinkel (17) von wenigstens etwa 20° aufweist.

5. Meßeinrichtung nach einem der Ansprüche 1 bis 4, dadurch gekennzeichnet, daß die beiden Stränge (6,7) in einer Strangebene (18) nebeneinander durch eine Prüfzone geführt sind, daß die Röntgenstrahlungsquelle (11) schräg zur Strangebene (18) ausgerichtet ist und daß die Meßstrahlung (8) die beiden Stränge (6,7) schräg zur Strangebene (18) durchdringt.

6. Meßeinrichtung nach einem der Ansprüche 1 bis 5, dadurch gekennzeichnet, daß als Röntgenstrahlungsdetektoren (19,21,22) Silizium-Fotodioden vorgesehen sind.

7. Meßeinrichtung nach einem der Ansprüche 1 bis 6, dadurch gekennzeichnet, daß die Detektoren (19,21,22) an eine Steueranordnung (28) angeschlossen sind und daß die Steueranordnung die Meßsignale wenigstens eines Detektors im Sinne des Ausgleichs des Einflusses einer Entfernungsdifferenz der Detektoren zur Strahlungsquelle (11) korrigierend ausgebildet ist.

8. Meßeinrichtung nach einem der Ansprüche 3 bis 7, dadurch gekennzeichnet, daß der weitere Detektor (21) zwischen den beiden den Strängen (6,7) zugeordneten Detektoren (19,22) angeordnet ist.

9. Meßeinrichtung nach einem der Ansprüche 3 bis 8, dadurch gekennzeichnet, daß die Detektoren (19,21,22) seitlich gestaffelt an einem gemeinsamen Tragkörper (23) angebracht sind.

10. Meßeinrichtung nach einem der Ansprüche 1 bis 9, dadurch gekennzeichnet, daß die Röntgenstrahlungsquelle (11) und der Tragkörper (23) mit den Detektoren (19,21,22) in einem als Baueinheit ausgebildeten Meßkopf (1) untergebracht sind und daß der Meßkopf (1) modulartig austauschbar in die Strangmaschine einsetzbar ist.
